(19)

Europäisches
Patentamt
European
Patent Office
Office européen
des brevets

(11) **EP 2 660 622 A2**

(12) **EUROPEAN PATENT APPLICATION**

(43) Date of publication:
**06.11.2013 Bulletin 2013/45**

(51) Int Cl.:
***G01S 13/90*** *(2006.01)*     *G01S 13/34* *(2006.01)*

(21) Application number: **13182027.6**

(22) Date of filing: **28.08.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **03.09.2012 CN 201210322665**

(71) Applicant: **Institute of Electronics, Chinese Academy of Sciences Haidian District Beijing (CN)**

(72) Inventors:
- **Wang, Yu**
  **100190 Haidian District Beijing (CN)**

- **Deng, Yun-kai**
  **100190 Haidian District Beijing (CN)**
- **Zhao, Feng-jun**
  **100190 Haidian District Beijing (CN)**
- **Ni, Jiang**
  **100190 Haidian District Beijing (CN)**
- **Jia, Xiao-Xue**
  **100190 Haidian District Beijing (CN)**
- **Feng, Jin**
  **100190 Haidian District Beijing (CN)**
- **Liu, Yue**
  **100190 Haidian District Beijing (CN)**

(74) Representative: **Gulde Hengelhaupt Ziebig & Schneider Patentanwälte - Rechtsanwälte Wallstrasse 58/59 10179 Berlin (DE)**

(54) **Imaging method and device in FMCW SAR**

(57) The disclosure discloses an imaging method in a Frequency Modulated Continuous Wave (FMCW) Synthetic Aperture Radar (SAR), which includes: presetting a reference echo signal model in an FMCW SAR; when starting an imaging processing, performing, by the FMCW SAR, an orientation Fourier transformation on a received FMCW echo signal to obtain a frequency domain echo signal; correcting, by the FMCW SAR, a distance-orientation shift brought by a Doppler time-frequency shift in the frequency domain echo signal using the reference echo signal model, to obtain a frequency domain image signal; and performing, by the FMCW SAR, an inverse Fourier transformation on the frequency domain image signal to obtain an image. The disclosure further discloses an imaging device in an FMCW SAR. With the disclosure, the FMCW SAR imaging precision

EP 2 660 622 A2

**Description**

**TECHNICAL FIELD**

The disclosure relates to the field of remote sensing and monitoring, and in particular to an imaging method and device in a Frequency Modulated Continuous Wave (FMCW) Synthetic Aperture Radar (SAR).

**BACKGROUND**

An SAR is a system for implementing all-day-long, all-weather earth observation imaging that is not limited by illumination and weather conditions. In recent years, with the ever-growing demand for application of an unmanned aerial vehicle, a micro satellite and a precision guided weapon in fields such as military reconnaissance, military target detection, anti-terrorism, aerial survey, unmanned remote sensing and the like, requirements of a user on the cost, volume, weight, and power consumption of a sensor increases constantly as well. As a signal is continuously transmitted and received using independent transmitting/receiving antennas in an FMCW-based SAR, a pulse duty cycle of 100% can therefore be implemented, thereby reducing the requirement of the SAR system for a peak power, easing difficulty in the design of a Transmit/Receive (T/R) assembly, simplifying the design of a power amplifying module, effectively increasing transmitter, T/R energy utilization efficiency as well as system reliability, the FMCW SAR is thus widely used in a remote sensing application such as the unmanned aerial vehicle. The imaging method in the FMCW SAR includes: frequency mixing is first performed on an FMCW signal received by a receiver; the FMCW signal after the frequency mixing is transformed into a 2D frequency domain; the signal transformed into the 2D frequency domain is multiplied by a reference signal model, and the resulting signal is transformed back to a time domain.

However, in the aforementioned imaging method in the FMCW SAR, the establishment of the reference signal model is based on a "go-stop" approximation, namely, it is derived assuming that a platform is immobile within a pulse duration. While in practice, the platform for the FMCW SAR is not immobile; Thus, if the motion of the FMCW within a pulse duration the platform is overlooked, it will lead to a case where the characteristics of an echo signal of the FMCW SAR cannot be described accurately with the reference signal model, thereby failing to meet the requirements of an FMCW SAR imaging precision.

Therefore, as the motion of the SAR platform within the pulse duration of the FMCW is overlooked in the related art, the FMCW SAR imaging precision cannot be increased.

**SUMMARY**

In view of this, the main purpose of the disclosure is to provide an imaging method and device in an FMCW SAR capable of increasing the FMCW SAR imaging precision.

For this purpose, the technical solution of the disclosure is implemented as follows.

The disclosure provides an imaging method in a Frequency Modulated Continuous Wave (FMCW) Synthetic Aperture Radar (SAR), which includes: presetting a reference echo signal model in an FMCW SAR, the method further includes:

when starting an imaging processing, performing, by the FMCW SAR, an orientation Fourier transformation on a received FMCW echo signal to obtain a frequency domain echo signal;

correcting, by the FMCW SAR, a distance-orientation shift brought by a Doppler time-frequency shift in the frequency domain echo signal using the reference echo signal model, to obtain a frequency domain image signal; and

performing, by the FMCW SAR, an inverse Fourier transformation on the frequency domain image signal to obtain an image.

In the aforementioned solution, the reference echo signal model may be: first establishing a Doppler echo delay function according to the Doppler time-frequency shift; then establishing the reference echo signal model according to the Doppler echo delay function, wherein an expression of the reference echo signal model is:

$$H_R\left(f_\tau,f\right)=\exp\left\{j\left[\frac{4\pi\alpha R_{ref}}{c}\sqrt{\left(f_0+f\right)^2-\left[\frac{v}{c}\left(f_0+f\right)+\frac{cf_\tau}{2\alpha v}\right]^2}-\frac{2\pi f_\tau f}{K_r}-4\pi\left(f_0+f_\tau+f\right)\tau_c\right]\right\};$$

Where f is a radial frequency variable, $f = K_r (t\text{-}\tau_c)$; $f_\tau$ is an orientation range variable; $R_{ref}$ is a reference slant range, $f_0$ is transmitting frequency of the FMCW, $K_r$ is a frequency modulation rate, $v$ is a Radar platform velocity, $c$ is a signal velocity, $\alpha$ is a Doppler factor, $\tau_c$ is a reference delay of a Dechirp operation, selected as a round trip echo delay from the center of a scene.

In the aforementioned solution, the performing, by the FMCW SAR, an orientation Fourier transformation on a received FMCW echo signal to obtain a frequency domain echo signal may include: when receiving the FMCW echo signal, performing, by the FMCW SAR, frequency mixing of the echo signal with an FMCW time domain transmitted signal according to a Dechirp technique, removing, by the FMCW SAR, a residual audio phase of the echo signal after the frequency mixing, and performing, by the FMCW SAR, the orientation Fourier transformation on the echo signal with the residual audio phase eliminated, to obtain the frequency domain echo signal.

In the aforementioned solution, the correcting, by the FMCW SAR, a distance-orientation shift brought by a Doppler time-frequency shift in the frequency domain echo signal may include: multiplying, by the FMCW SAR, the frequency domain echo signal by the preset reference echo signal model.

In the aforementioned solution, the method may further include: after the multiplying, by the FMCW SAR, the frequency domain echo signal by the preset reference echo signal model, replacing a frequency radical sign term in the frequency domain echo signal with reset distance frequency, wherein all constant-distance terms in the frequency domain echo signal have been eliminated.

The disclosure further provides an imaging device in a Frequency Modulated Continuous Wave (FMCW) Synthetic Aperture Radar (SAR), which includes: a frequency-mixing and transforming module, a reference echo signal model module, and an inverse transforming module, wherein
the frequency-mixing and transforming module is configured to perform, when the FMCW SAR starts an imaging processing, an orientation Fourier transformation on a received FMCW echo signal to obtain a frequency domain echo signal, and send the frequency domain echo signal to the reference echo signal model module;
the reference echo signal model module is configured to store a preset reference echo signal model, use the reference echo signal model to correct a Doppler time-frequency shift in the frequency domain echo signal sent from the frequency-mixing and transforming module to obtain a frequency domain image signal, and send the frequency domain image signal to the inverse transforming module; and
the inverse transforming module is configured to perform an inverse Fourier transformation on the frequency domain image signal sent from the reference echo signal model module to obtain an image.

In the aforementioned solution, the reference echo signal model module ,may be specifically configured to first establish a Doppler echo delay function according to the Doppler time-frequency shift, then establish the reference echo signal model according to the Doppler echo delay function and store, wherein an expression of the reference echo signal module is:

$$H_R\left(f_\tau,f\right)=\exp\left\{j\left[\frac{4\pi\alpha R_{ref}}{c}\sqrt{\left(f_0+f\right)^2-\left[\frac{v}{c}\left(f_0+f\right)+\frac{cf_\tau}{2\alpha v}\right]^2}-\frac{2\pi f_\tau f}{K_r}-4\pi\left(f_0+f_\tau+f\right)\tau_c\right]\right\};$$

Wherein f is a radial frequency variable, $f = K_r(t\text{-}\tau_c)$; $f_\tau$ is an orientation range variable; $R_{ref}$ is a reference slant range, $f_0$ is transmitting frequency of the FMCW, $K_r$ is a frequency modulation rate, $v$ is a Radar platform velocity, $c$ is a signal velocity, $\alpha$ is a Doppler factor, $\tau_c$ is a reference delay of a Dechirp operation, selected as a round trip echo delay from the center of a scene.

In the aforementioned solution, the frequency-mixing and transforming module may be specifically configured to perform, when receiving the FMCW echo signal, frequency mixing of the echo signal with an FMCW time domain transmitted signal according to a Dechirp technique, remove a residual audio phase of the echo signal after the frequency mixing, and perform the orientation Fourier transformation on the echo signal with the residual audio phase eliminated, to obtain the frequency domain echo signal.

In the aforementioned solution, the reference echo signal model module may be specifically configured to multiply the frequency domain echo signal by the reference echo signal model, to correct a distance-orientation shift brought by a Doppler time-frequency shift in the frequency domain echo signal.

In the aforementioned solution, the reference echo signal model module may be further configured to replace a frequency radical sign term in the frequency domain echo signal with reset distance frequency, wherein all constant-distance terms in the frequency domain echo signal have been eliminated.

With the imaging method and device in the FMCW SAR provided by the disclosure, when the SAR receives the echo signal, a distance-orientation shift brought by a Doppler time-frequency shift in the frequency domain echo signal can be corrected using the reference echo signal model; Thus, the Doppler time-frequency shift generated by the motion of the SAR platform within the pulse duration of the FMCW can be removed, thereby solving the problem of failing to correct the Doppler time-frequency shift in the related art and increasing the FMCW SAR imaging precision.

## BRIEF DESCRIPTION OF THE DRAWINGS

Fig.1 is a flowchart of an imaging method in a FMCW SAR according to the disclosure; and

Fig.2 is a diagram of the compositional structure of an imaging device in a FMCW SAR according to the disclosure.

## DETAILED DESCRIPTION

The basic idea of the disclosure is that: a reference echo signal model is preset in an FMCW SAR; when starting an imaging processing, the FMCW SAR performs an orientation Fourier transformation on a received FMCW echo signal to obtain a frequency domain echo signal; the FMCW SAR corrects a distance-orientation shift brought by a Doppler time-frequency shift in the frequency domain echo signal using a reset reference function, to obtain a frequency domain image signal; and the FMCW SAR performs an inverse Fourier transformation on the frequency domain image signal to obtain an image.

The disclosure is further elaborated below with reference to the drawings and specific embodiments.

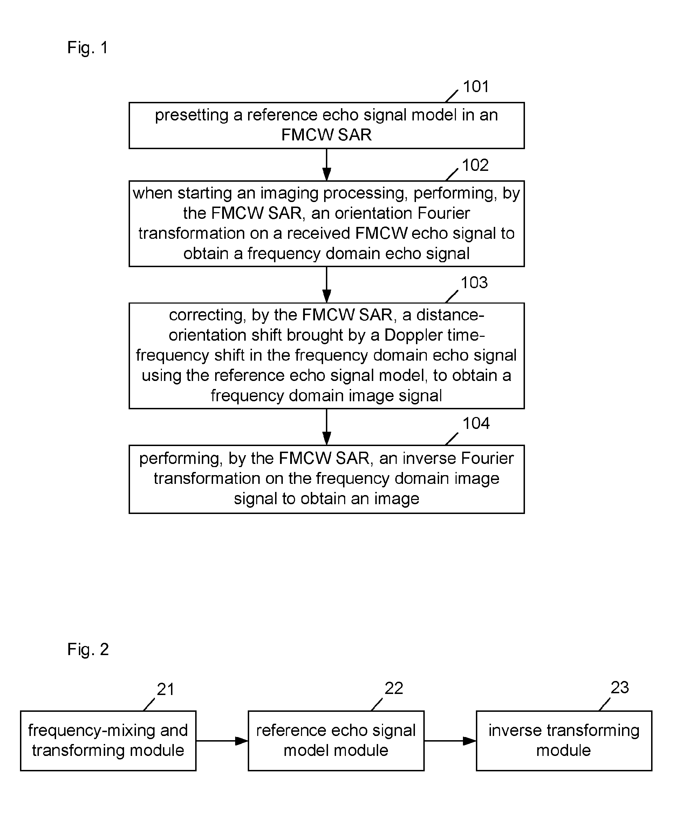

An imaging method in an FMCW SAR proposed by the disclosure, as shown in Fig. 1, includes the following steps.

Step 101: presetting a reference echo signal model in an FMCW SAR.

Here, the reference echo signal module first establishes a Doppler echo delay function according to the Doppler time-frequency shift, then establishes the reference echo signal model according to the Doppler echo delay function, wherein a specific expression of the reference echo signal model is:

$$H_R\left(f_\tau, f\right) = \exp\left\{ j\left[ \frac{4\pi\alpha R_{ref}}{c}\sqrt{\left(f_0+f\right)^2 - \left[\frac{v}{c}\left(f_0+f\right)+\frac{cf_\tau}{2\alpha v}\right]^2} - \frac{2\pi f_\tau f}{K_r} - 4\pi\left(f_0+f_\tau+f\right)\tau_c \right] \right\} ;$$

Where $f$ is a radial frequency variable, and may be calculated with formula $f = K_r(t-\tau_c)$; $f_\tau$ is an orientation frequency variable; $R_{ref}$ is a reference slant range, and may be selected as the shortest slant range from a center point of a local scene to an SAR flight path, $f_0$ is transmitting frequency of the FMCW, $K_r$ is a frequency modulation rate, $v$ is a Radar platform velocity, $c$ is a signal velocity, $\alpha$ is a Doppler factor, $\tau_c$ is a reference delay of a Dechirp operation, generally selected as a round trip echo delay from the center of the scene.

The establishing process of the reference echo signal module specifically includes:

Step a: calculating a reference time domain echo signal of the FMCW using the Doppler echo delay function.

Here, the Doppler echo delay function adds a Doppler shift generated by a SAR motion to a function in an echo delay calculation, which specifically is: $\tau_d = 2\frac{c^2}{c^2-v^2}\left[\frac{\sqrt{R_0^2+v^2\left(\tau+t-\tau_0\right)^2}}{c} + \frac{v^2}{c^2}\left(\tau+t-\tau_0\right)\right]$ where $v$ is a Radar platform velocity, $c$ is the signal velocity, $\tau$ and $t$ are an orientation time variable and a radial time variable,

respectively, $R_0$ is the shortest slant range from a target point to the SAR flight path, $\tau_0$ is a zero Doppler time, $\sigma_0$ is a backscattering coefficient.

The transmission of the FMCW belongs to the related art and is not elaborated here; A reference time domain transmitted signal of the FMCW may be expressed as:

$s(t)=\exp(j\pi K_r t^2)$; where $K_r$ is the frequency modulation rate, t is the radial time variable;

The calculating the reference time domain echo signal of the FMCW belongs to the related art, and may be expressed as:

$g_i(\tau,t)=\sigma(\tau_0,r_0)s(t-\tau_d)\exp[j2\pi f_0(t-\tau d)]$; Where $\sigma(\tau_0,r_0)$ represents the backscattering coefficient of a target, which belongs to the related art and is not elaborated here; $(\tau_0,r_0)$ are ground target coordinates; $f_0$ is the transmitting frequency of the FMCW.

Step b: performing a frequency mixing calculation on the reference time domain echo signal, and removing a residual audio phase of the reference time domain echo signal after the frequency mixing.

The frequency mixing calculation includes: multiplying the time domain echo signal by an FMCW time domain transmitted signal, to obtain the time domain echo signal after the frequency mixing; the time domain echo signal after the frequency mixing may be expressed as:

$$g_d\left(\tau,t\right)=\sigma(\tau_0,R_0)\exp\left[-j2\pi f_0\left(\tau_d-\tau_c\right)\right]\exp\left[-j2\pi K_r\left(t-\tau_c\right)\left(\tau_d-\tau_c\right)\right]\exp\left[j\pi K_r\left(\tau_d-\tau_c\right)^2\right]$$

; where $\sigma(\tau_0,R_0)$ represents the backscattering coefficient of the target, which belongs to the related art and is not elaborated here; $(\tau_0,R_0)$ are the ground target coordinates, $\tau$ and $t$ are the orientation time variable and the radial time variable, respectively, $R_0$ is the shortest slant range from the target point to the SAR flight path, $\tau_0$ is the zero Doppler time, $K_r$ is the frequency modulation rate, t is the radial time variable, $f_0$ is the transmitting frequency of the FMCW, $\tau_c$ is the reference delay of the Dechirp operation, and are generally selected as the round trip echo delay from the center of the scene.

The removing a residual audio phase of the reference echo signal after the frequency mixing is deleting a high-order term in the reference time domain echo signal after the frequency mixing.

Step c: performing the orientation Fourier transformation on the reference time domain echo signal with the residual audio phase eliminated, and calculating a reference frequency domain echo signal as the reference echo signal model according to a principle of stationary phase.

Specifically, the reference time domain echo signal with the residual audio phase eliminated is first transformed into a radial frequency domain reference echo signal; the orientation Fourier transformation is then performed on the radial frequency domain reference echo signal, and the reference frequency domain echo signal is calculated as the reference echo signal model according to the principle of stationary phase.

Here, the transforming the reference time domain echo signal with the residual audio phase eliminated into the radial frequency domain reference echo signal belongs to the related art, and may include that: $K_r(t-\tau_c)$ is replaced with f, and the reference time domain echo signal with the residual audio phase eliminated is transformed into

$$g\left(\tau,f\right)=\sigma(\tau_0,R_0)\exp\left\{-j2\pi\left(f_0+f\right)\left(\tau_d-\tau_c\right)\right\}$$ .

Performing the orientation Fourier transformation on the radial frequency domain reference echo signal, and calculating the reference frequency domain echo signal as the reference echo signal model according to the principle of stationary phase may be:

$$G\left(f_\tau, f\right) = \sigma(\tau_0, R_0) \int \exp\left\{-j4\pi\alpha\left(f_0 + f\right)\left(\frac{R\left(\tau_n + t\right)}{c} + \frac{v^2}{c^2}\left(\tau_n + t - \tau_0\right) - \frac{r_c}{c}\right) + 2\pi f_\tau\tau_n\right\}d\tau_n$$ ;

where $R\left(\tau_n + t\right) = \sqrt{R_0{}^2 + v^2\left(\tau_n + 2t - \tau_0\right)^2}$ ;

Where $\sigma(\tau_0, R_0)$ represents the backscattering coefficient of the target, which belongs to the related art and is not elaborated here; $(\tau_0, R_0)$ are the ground target coordinates, $t$ is the radial time variable, $R_0$ is the shortest slant range from the target point to the SAR flight path, $\tau_0$ is the zero Doppler time, t is the radial time variable, $f_0$ is the transmitting frequency of the FMCW, $\tau_c$ is the reference delay of the Dechirp operation, and are generally selected as the round trip echo delay from the center of the scene, $\tau_n$ is an orientation sampling point.

Then, using the principle of stationary phase, the aforementioned formula is calculated as

$$H_R\left(f_\tau, f\right) = \exp\left\{j\left[\frac{4\pi\alpha R_{ref}}{c}\sqrt{\left(f_0 + f\right)^2 - \left[\frac{v}{c}\left(f_0 + f\right) + \frac{cf_\tau}{2\alpha v}\right]^2} - \frac{2\pi f_\tau f}{K_r} - 4\pi\left(f_0 + f_\tau + f\right)\tau_c\right]\right\}$$ ;

Where $R_{ref}$ is the reference slant range, and may be selected as the shortest slant range from the center point of the local scene to the SAR flight path, $f_0$ is the transmitting frequency of the FMCW, $K_r$ is the frequency modulation rate, $v$ is the Radar platform velocity, $c$ is the signal velocity, $\tau_c$ is the reference delay of the Dechirp operation, and are generally selected as the round trip echo delay from the center of the scene.

Step 102: when starting an imaging processing, performing, by the FMCW SAR, an orientation Fourier transformation on a received FMCW echo signal to obtain a frequency domain echo signal.

Specifically, when starting the imaging processing and receiving the FMCW echo signal, according to a Dechirp technique, the FMCW SAR performs the frequency mixing of the received FMCW echo signal the echo signal and the FMCW time domain transmitted signal, removes the residual audio phase of the echo signal after the frequency mixing, and performs the orientation Fourier transformation on the echo signal with the residual audio phase eliminated, to obtain the frequency domain echo signal.

Here, starting an imaging processing may be setting the SAR to enter an imaging processing mode according to a practical circumstance, and is not elaborated here; the Dechirp technique belongs to the related art and is not elaborated here; removing the residual audio phase in the echo signal belongs to the related art and is not elaborated here. The orientation Fourier transformation belongs to the related art and is not elaborated here.

Step 103: correcting, by the FMCW SAR, a distance-orientation shift brought by a Doppler time-frequency shift in the frequency domain echo signal using the reference echo signal model, to obtain a frequency domain image signal.

Here, the correcting includes: multiplying the frequency domain echo signal by the preset reference echo signal model;

Furthermore, the imaging method may further include: after the multiplying, by the FMCW SAR, the frequency domain echo signal by the preset reference echo signal model, replacing a frequency radical sign term in the frequency domain echo signal with reset distance frequency, wherein all constant-distance terms in the frequency domain echo signal have been eliminated.

Step 104: performing, by the FMCW SAR, an inverse Fourier transformation on the frequency domain image signal to obtain an image.

Here, the performing the inverse Fourier transformation on the frequency domain image signal belongs to the related art and is not elaborated here.

As shown in Fig. 2, the disclosure provides an imaging device in an FMCW SAR, which includes: a frequency-mixing and transforming module 21, a reference echo signal model module 22, and an inverse transforming module 23, wherein

The frequency-mixing and transforming module 21 is configured to perform, when the SAR starts an imaging processing, an orientation Fourier transformation on a received FMCW echo signal to obtain a frequency domain echo signal, and send the frequency domain echo signal to the reference echo signal model module 22;

The reference echo signal model module 22 is configured to store a preset reference echo signal model, use the reference echo signal model to correct a distance-orientation shift brought by a Doppler time-frequency shift in the frequency domain echo signal sent from the frequency-mixing and transforming module 21 to obtain a frequency domain image signal, and send the frequency domain image signal to the inverse transforming module 23;

The inverse transforming module 23 is configured to perform an inverse Fourier transformation on the frequency domain image signal sent from the reference echo signal model module 22 to obtain an image.

The frequency-mixing and transforming module 21 is specifically configured to perform, when receiving the echo signal, frequency mixing of the echo signal with a time domain transmitted signal according to a Dechirp technique, remove a residual audio phase of the echo signal after the frequency mixing, and perform the orientation Fourier transformation on the echo signal with the residual audio phase eliminated, to obtain the frequency domain echo signal.

The reference echo signal model module 22 is specifically configured to first establish a Doppler echo delay function according to the Doppler time-frequency shift, then establish the reference echo signal model according to the Doppler echo delay function and store.

The reference echo signal model module 22 is specifically configured to first establish a Doppler echo delay function according to the Doppler time-frequency shift, then establish the reference echo signal model according to the Doppler echo delay function and store; An expression of the reference echo signal module is:

$$H_R\left(f_\tau, f\right) = \exp\left\{ j\left[ \frac{4\pi\alpha R_{ref}}{c}\sqrt{\left(f_0 + f\right)^2 - \left[\frac{v}{c}\left(f_0 + f\right) + \frac{cf_\tau}{2\alpha v}\right]^2} - \frac{2\pi f_\tau f}{K_r} - 4\pi\left(f_0 + f_\tau + f\right)\tau_c \right] \right\};$$

Where f is a radial frequency variable, $f = K_r(t-\tau_c)$; $f_\tau$ is an orientation range variable; $R_{ref}$ is a reference slant range, $f_0$ is transmitting frequency of the FMCW,

$K_r$ is a frequency modulation rate, $v$ is a Radar platform velocity, $c$ is a signal velocity, $\alpha$ is a Doppler factor, $\tau_c$ is a reference delay of a Dechirp operation, selected as a round trip echo delay from the center of a scene.

The reference echo signal model module 22 is specifically configured to multiply the frequency domain echo signal by the reference echo signal model.

The reference echo signal model module 22 is further configured to replace a frequency radical sign term in the frequency domain echo signal with reset distance frequency to obtain the frequency domain image signal, wherein all constant-distance terms in the frequency domain echo signal have been eliminated.

The aforementioned imaging device may be installed in an existing FMCW SAR as a logic module.

What described above are merely preferred embodiments of the disclosure, and are not intended to limit the scope of the disclosure.


**Claims**

1.   An imaging method in a Frequency Modulated Continuous Wave (FMCW) Synthetic Aperture Radar (SAR), comprising: presetting a reference echo signal model in an FMCW SAR, further comprising:

     when starting an imaging processing, performing, by the FMCW SAR, an orientation Fourier transformation on a received FMCW echo signal to obtain a frequency domain echo signal;
     correcting, by the FMCW SAR, a distance-orientation shift brought by a Doppler time-frequency shift in the frequency domain echo signal using the reference echo signal model, to obtain a frequency domain image signal; and
     performing, by the FMCW SAR, an inverse Fourier transformation on the frequency domain image signal to obtain an image.

2.   The imaging method according to claim 1, wherein the reference echo signal model is: first establishing a Doppler echo delay function according to the Doppler time-frequency shift; then establishing the reference echo signal model according to the Doppler echo delay function, wherein an expression of the reference echo signal model is:

$$H_R\left(f_\tau, f\right) = \exp\left\{ j\left[ \frac{4\pi\alpha R_{ref}}{c}\sqrt{\left(f_0+f\right)^2 - \left[\frac{v}{c}\left(f_0+f\right)+\frac{cf_\tau}{2\alpha v}\right]^2} - \frac{2\pi f_\tau f}{K_r} - 4\pi\left(f_0+f_\tau+f\right)\tau_c \right] \right\};$$

where f is a radial frequency variable, $f = K_r(t\text{-}\tau_c)$; $f_\tau$ is an orientation range variable; $R_{ref}$ is a reference slant range, $f_0$ is transmitting frequency of the FMCW, $K_r$ is a frequency modulation rate, $v$ is a Radar platform velocity, $c$ is a signal velocity, $\alpha$ is a Doppler factor, $\tau_c$ is a reference delay of a Dechirp operation, selected as a round trip echo delay from the center of a scene.

3. The imaging method according to claim 1, wherein the performing, by the FMCW SAR, an orientation Fourier transformation on a received FMCW echo signal to obtain a frequency domain echo signal comprises: when receiving the FMCW echo signal, performing, by the FMCW SAR, frequency mixing of the echo signal with an FMCW transmitted time domain signal according to a Dechirp technique, removing, by the FMCW SAR, a residual audio phase of the echo signal after the frequency mixing, and performing, by the FMCW SAR, the orientation Fourier transformation on the echo signal with the residual audio phase eliminated, to obtain the frequency domain echo signal.

4. The imaging method according to claim 1, wherein correcting, by the FMCW SAR, a distance-orientation shift brought by a Doppler time-frequency shift in the frequency domain echo signal comprises: multiplying, by the FMCW SAR, the frequency domain echo signal by the preset reference echo signal model.

5. The imaging method according to claim 4, further comprising: after the multiplying, by the FMCW SAR, the frequency domain echo signal by the preset reference echo signal model, replacing a radical sign term in the frequency domain echo signal with reset distance frequency, wherein all constant-distance terms in the frequency domain echo signal has been eliminated.

6. An imaging device in a Frequency Modulated Continuous Wave (FMCW) Synthetic Aperture Radar (SAR), comprising: a frequency-mixing and transforming module, a reference echo signal model module, and an inverse transforming module, wherein
the frequency-mixing and transforming module is configured to perform, when the FMCW SAR starts an imaging processing, an orientation Fourier transformation on a received FMCW echo signal to obtain a frequency domain echo signal, and send the frequency domain echo signal to the reference echo signal model module;
the reference echo signal model module is configured to store a preset reference echo signal model, use the reference echo signal model to correct a Doppler time-frequency shift in the frequency domain echo signal sent from the frequency-mixing and transforming module to obtain a frequency domain image signal, and send the frequency domain image signal to the inverse transforming module; and
the inverse transforming module is configured to perform an inverse Fourier transformation on the frequency domain image signal sent from the reference echo signal model module to obtain an image.

7. The imaging device according to claim 6, wherein
the reference echo signal model module is configured to first establish a Doppler echo delay function according to the Doppler time-frequency shift, then establish the reference echo signal model according to the Doppler echo delay function and store, wherein an expression of the reference echo signal module is:

$$H_R\left(f_\tau, f\right) = \exp\left\{ j\left[ \frac{4\pi\alpha R_{ref}}{c}\sqrt{\left(f_0+f\right)^2 - \left[\frac{v}{c}\left(f_0+f\right)+\frac{cf_\tau}{2\alpha v}\right]^2} - \frac{2\pi f_\tau f}{K_r} - 4\pi\left(f_0+f_\tau+f\right)\tau_c \right] \right\};$$

where f is a radial frequency variable, $f = K_r(t\text{-}\tau_c)$; $f_\tau$ is an orientation range variable; $R_{ref}$ is a reference slant range, $f_0$ is transmitting frequency of the FMCW, $K_r$ is a frequency modulation rate, $v$ is a Radar platform velocity, $c$ is a signal velocity, $\alpha$ is a Doppler factor, $\tau_c$ is a reference delay of a Dechirp operation, selected as a round trip echo delay from the center of a scene.

**8.** The imaging device according to claim 6, wherein
the frequency-mixing and transforming module is configured to perform, when receiving the FMCW echo signal, frequency mixing of the echo signal with an FMCW transmitted time domain signal according to a Dechirp technique, remove a residual audio phase of the echo signal after the frequency mixing, and perform the orientation Fourier transformation on the echo signal with the residual audio phase eliminated, to obtain the frequency domain echo signal.

**9.** The imaging device according to claim 7, wherein
the reference echo signal model module is configured to multiply the frequency domain echo signal by the reference echo signal model, to correct a distance-orientation shift brought by a Doppler time-frequency shift in the frequency domain echo signal.

**10.** The imaging device according to claim 9, wherein
the reference echo signal model module is further configured to replace a radical sign term in the frequency domain echo signal with reset distance frequency, wherein all constant-distance terms in the frequency domain echo signal has been eliminated.

Fig. 1

```
                                                        ┌ 101
┌─────────────────────────────────────────────┐
│  presetting a reference echo signal model in an │
│                   FMCW SAR                    │
└─────────────────────────────────────────────┘
                        │
                        ▼                          ┌ 102
┌─────────────────────────────────────────────┐
│  when starting an imaging processing, performing, by │
│      the FMCW SAR, an orientation Fourier      │
│  transformation on a received FMCW echo signal to │
│        obtain a frequency domain echo signal     │
└─────────────────────────────────────────────┘
                        │
                        ▼                          ┌ 103
┌─────────────────────────────────────────────┐
│     correcting, by the FMCW SAR, a distance-    │
│      orientation shift brought by a Doppler time- │
│   frequency shift in the frequency domain echo signal │
│    using the reference echo signal model, to obtain a │
│          frequency domain image signal          │
└─────────────────────────────────────────────┘
                        │
                        ▼                          ┌ 104
┌─────────────────────────────────────────────┐
│  performing, by the FMCW SAR, an inverse Fourier │
│    transformation on the frequency domain image  │
│            signal to obtain an image            │
└─────────────────────────────────────────────┘
```

Fig. 2

```
         ┌ 21                    ┌ 22                    ┌ 23
┌──────────────────┐   ┌──────────────────┐   ┌──────────────────┐
│ frequency-mixing and │──▶│  reference echo signal │──▶│ inverse transforming │
│ transforming module  │   │    model module     │   │       module       │
└──────────────────┘   └──────────────────┘   └──────────────────┘
```